(19) Europäisches Patentamt / European Patent Office / Office européen des brevets

(11) **EP 2 058 643 B1**

(12) **EUROPEAN PATENT SPECIFICATION**

(45) Date of publication and mention
of the grant of the patent:
**26.12.2018 Bulletin 2018/52**

(51) Int Cl.:
***G01Q 60/22*** *(2010.01)*

(21) Application number: **08168535.6**

(22) Date of filing: **06.11.2008**

(54) **Noncontact measurement probe**

Berührungslose Messsonde

Sonde de mesure sans contact

(84) Designated Contracting States:
**DE FR GB**

(30) Priority: **07.11.2007 JP 2007289221**
**24.10.2008 JP 2008274517**

(43) Date of publication of application:
**13.05.2009 Bulletin 2009/20**

(73) Proprietor: **Mitutoyo Corporation**
**Kawasaki-shi, Kanagawa 213-8533 (JP)**

(72) Inventor: **Kubo, Koji**
**Sapporo-shi**
**Hokkaido 060-0807 (JP)**

(74) Representative: **Gill Jennings & Every LLP**
**The Broadgate Tower**
**20 Primrose Street**
**London EC2A 2ES (GB)**

(56) References cited:
**EP-A1- 1 672 409      US-A1- 2006 153 045**
**US-B1- 7 149 395**

**Description**

TECHNICAL FIELD

The present invention relates to a noncontact measurement probe and, more particularly, to an improvement in a light spot radiation mechanism.

BACKGROUND ART

A noncontact measuring device, such as an optical microscope, has hitherto been used for measuring a minute area of a workpiece in a noncontacting manner.
An objective lens is used as a noncontact measurement probe in the related-art noncontact measuring device (see; for instance, Patent Document 1).
In the related-art noncontact measuring device, light originating from light emission means is focused and radiated on a minute area on a workpiece by way of an objective lens, thereby again collecting light reflected from the minute area on the workpiece by way of the objective lens. In the noncontact measuring device, the thus-collected light is received by observation means and detection means, thereby measuring the minute area on the workpiece in a noncontacting manner.
[Patent Document 1] Japanese Patent Unexamined Publication
However, since there is a limit to miniaturization of an objective lens of the noncontact measurement probe, difficulty is sometimes encountered in performing measurement at a narrow location.
Although measurement of a minuter area has been desired, satisfiable resolving power has not necessarily been acquired particularly in a field where precise measurement is performed, because of a limit on the resolving power of the objective lens.
For this reason, in the field where precise measurement is performed, plenty of room for improvement has been left in connection with miniaturization of the noncontact measurement probe and enhancement of resolving power. However, an appropriate technique for resolving the problems has not been available in the related art.
US-A-2006/0153045 discloses an optical head configured to emit a narrow beam of light using a transparent substrate, a thin film and a surface structure with sub-wavelength surface profile. The incident light transmits through the transparent substrate, forms a surface plasma wave along the sub-wavelength aperture located within the thin film, and finally re-emits through spatial coupling with the sub-wavelength profile of the surface structure.
EP-A-1672409 discloses an optical device for transmitting light at high efficiency, utilising a conductive thin film with a periodic surface pattern, an inner region of which and an outer region of which each having uniform grating pitches, related in that the period length of the second periodic surface pattern is substantially equal to an odd integral multiple of a half of the period length of the first period surface pattern.
US-A-7149395 discloses a light enhancing component with a surface plasmon polariton structure coated on to the end of an optical fibre.

SUMMARY

The present invention has been conceived in view of the problem of the related art of the comparative example and intended to provide a noncontact measurement probe that enables making of an attempt to achieve further miniaturization and enhanced resolving power.
A result achieved through assiduous studies about the problems conducted by the present inventors shows the following fact and led to completion of the present invention. Namely, surface plasmon conversion means is provided at an extremity of an optical fiber, and light traveling through the optical fiber is converted into surface plasmon. The thus-converted light is again converted by means of grooves of a grating, to thus acquire light beams. When radiated, a light spot can be reduced in the direction of an optical axis and a direction orthogonal to the optical axis by means of interference among the thus-acquired light beams.
Specifically, a noncontact measurement probe according to claim 1 of the present invention for achieving the objective is a noncontact measurement probe used when a workpiece is measured in a noncontacting manner upon exposure to light, the probe comprising:

a light guiding path which guides a light, and surface plasmon conversion means which forms a light spot on the workpiece by way of surface plasmon and has a metal film which is provided on a light exit end of the light guiding path or in a vicinity of the light exit end of the light guiding path, the metal film having an aperture provided in line with an optical axis of the light guiding path, and a grating provided around the aperture on an exit-side surface of the metal film which faces the workpiece,
wherein light from the light guiding path is converted into surface plasmon by means of the metal film, and the light spot is formed on a location, along an optical axis of the aperture, spaced from the surface plasmon conversion means by a desired distance determined from a width and a pitch of the grooves by means of interference among light beams acquired by means of re-conversion of the surface plasmon at respective grooves of the grating
characterised in that the width and pitch of the grooves of the grating are set so as to become gradually smaller from the aperture toward a radial outside whereby the light spot is radiated on the location, along the optical axis of the aperture, spaced from the surface plasmon conversion means by a desired distance,
wherein, provided that a distance from said exit-side surface of the metal film of the surface plasmon conversion means to the light spot along the optical axis of the aperture is taken as "f" and that a phase of light re-converted by the $s$th edge of the $n$th groove from the aperture toward a radial outside is taken as $\phi_{n,s}$, the grating is provided on the metal film such that the position $x_{n,s}$ of the $s$th edge of the $n$th groove from the aperture toward the radial outside fulfils the conditional equations (1) and (2), wherein
[Mathematical Expression 1]

$$\phi_{n,s} + \frac{\omega}{c}\sqrt{f^2 + x_{n,s}^2} - \frac{\omega}{c}f = 2\pi m \qquad (1)$$

$$\phi_{n,s} = \sum_{k=0}^{n-1} \delta_k + n_{eff}\frac{\omega}{c}x_{n,s} + \Delta\phi_{n,s} \qquad (2)$$

where

$c$: light speed of the light
$\omega$: an angular frequency of the light
$m$: a number (an integer) of the groove from the aperture
$n_{eff}$: effective refractive index of the surface plasmon
$\delta_k$: a phase lag of the surface plasmon achieved after the surface plasmon has transmitted through the $k$th groove from the aperture
$\delta_0$: an initial phase difference between spatially-propagated light from the aperture and the surface plasmon
$\Delta\phi_{n,s}$: a difference between the phase of surface plasmon reached at the $s$th edge of the $n$th groove from the aperture and the phase of light re-converted at the edge position of the groove.

In the present invention, in a case where a surface of the workpiece is caused to be spaced apart from or approach the extremity of the noncontact measurement probe, a point in time when intensity of light acquired as a result of radiation of the light spot on the surface of the workpiece shows the maximum value is preferably taken as a point in time when the distance between the surface of the workpiece and the extremity of the noncontact measurement probe comes to a desired distance determined from the groove width and the groove pitch.

In the present invention, the surface of the workpiece is scanned while the distance between the surface of the workpiece and the extremity of the noncontact measurement probe is controlled constantly at the desired distance, so that information about irregularities in the surface of the workpiece is acquired.

In the probe, it is preferable that the light guiding path is an optical fiber, and the metal film is provided on a light exit end of the optical fiber.

In the probe, it is preferable that the surface plasmon conversion means has a holding member disposed in the vicinity of the light exit end of the light guiding path and to be spaced from the light guiding path and the metal film is provided on the holding member.

In the probe, it is preferable that the aperture of the metal film has a rectangular shape, and the grating is formed parallel with a long side of the aperture.

[Advantages of the Invention]

In the noncontact measurement probe of the present invention, the surface plasmon conversion means is provided at an extremity of the optical fiber, and a light spot stemming from light interference is radiated on a workpiece.

Consequently, in the present invention, the light spot can be reduced in size in the surface direction and the direction of an optical axis. Hence, an attempt can be made to miniaturize the noncontact measurement probe and enhance resolving power of the probe.

In the present invention, the width and pitch of the grooves of the grating are made gradually smaller from the aperture toward the radial outside, whereby the degree of light collected by the surface plasmon conversion means is enhanced. Accordingly, an attempt can be surely made to miniaturize the noncontact measurement probe and enhance resolving power of the probe.

In the present invention, a grating is provided on a metal film so as to fulfill conditional equations (1) and (2), thereby further enhancing the degree of collection achieved by the surface plasmon conversion means. Hence, an attempt can be made to enhance miniaturization of a noncontact measurement probe and an increase in resolving power of the probe.

In the present invention, a location spaced from the surface of the workpiece by the desired distance can be surely detected by means of the noncontact measurement probe.

In the present invention, the surface of a workpiece is scanned while the distance between the extremity of the noncontact measurement probe and the surface of the workpiece is constantly controlled at the desired distance, so that information about irregularities in the surface of the workpiece can be acquired.

In the present invention, the aperture provided in the metal film is formed into a rectangular shape and the grating is provided parallel with a long side of the rectangular aperture, so that the light efficiency can be improved.

BRIEF DESCRIPTION OF THE DRAWINGS

Figs. 1A to 1C are descriptive views of a schematic configuration of a noncontact measurement device using a noncontact measurement probe of an embodiment of the present invention;

Fig. 2 is a descriptive view of characteristic surface plasmon conversion means in the noncontact measurement probe of the embodiment of the present invention;

Figs. 3A to 3C are descriptive views of an optical spot radiation mechanism of the noncontact measurement probe of the embodiment of the present invention;

Figs. 4A to 4C show a result of comparison between a light spot generated by a noncontact measurement probe of a comparative example and a light spot generated by a noncontact measurement probe of an embodiment of the present invention; and

Fig. 5 is a modification of the noncontact measurement device shown in Figs. 1A through 1C.

Figs. 6A to 6C show views showing the modified example of the surface plasmon conversion means having a grating holding member.

Fig. 7 shows views showing the modified example of the surface plasmon conversion means having a metal film with a rectangular aperture.

[Descriptions of Reference Numerals]

| 10 | NONCONTACT MEASUREMENT DEVICE |
| 12 | NONCONTACT MEASUREMENT PROBE |
| 24 | SURFACE PLASMON CONVERSION MEANS |
| 26 | OPTICAL FIBER |
| 36 | METAL FILM |
| 38 | APERTURE |
| 40 | GRATING |
| 44 | GROOVE |

DETAILED DESCRIPTION

A preferred embodiment of the present invention will be described hereunder by reference to the drawings.

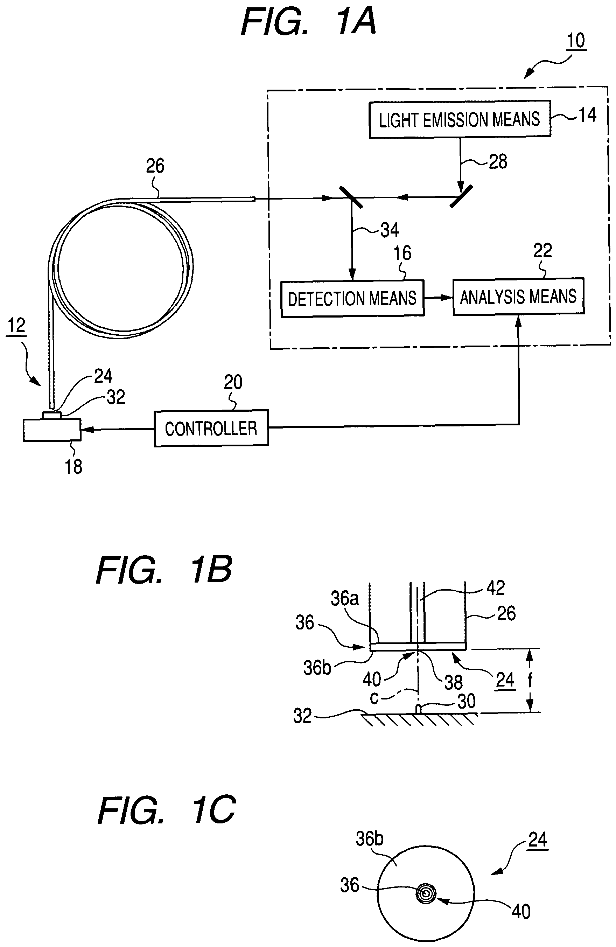

Fig. 1A shows a schematic configuration of a noncontact measurement device using a noncontact measurement probe of an embodiment of the present invention. Fig. 1B is a longitudinal cross-sectional view of an extremity of a noncontact measurement probe; and Fig. 1C is a view showing the extremity of the noncontact measurement probe when viewed from below. In the present embodiment, there will be described a case where a light spot is radiated on the surface of a workpiece from a noncontact measurement probe and where light reflected from the surface of the workpiece is collected.

The noncontact measurement device 10 shown in Fig. 1A has a noncontact measurement probe 12; light emission means 14; detection means 16; a stage 18; a controller 20; and analysis means 22.

The noncontact measurement probe 12 has surface plasmon conversion means 24.

The surface plasmon conversion means 24 has a metal nanostructure provided at an extremity of an optical fiber 26 in a single mode.

The surface plasmon conversion means 24 radiates the laser beam 28 originating from the optical fiber 26, as the light spot 30, on the surface of the workpiece 32 by way of surface plasmon.

Light emission means 14 emits a laser beam 28 of specific wavelength and causes the beam to enter an end face of the optical fiber 26. When the laser beam 28 originating from the light emission means 14 is caused to enter the optical fiber 26 from an end face of the optical fiber 26, a light spot 30 is radiated on the surface of a workpiece 32 by way of surface plasmon conversion means 24. Light 34 reflected from the workpiece 32 is collected by means of the noncontact measurement probe 12, and the thus-collected light is guided to detection means 16 by means of the optical fiber 26. The detection means 16 receives the light 34, which has been reflected from the workpiece 32 and is collected by the noncontact measurement probe 12, and outputs the intensity of received light.

The workpiece 32 is placed on a stage 18. The controller 20 controls a scan over the surface of the workpiece 32 while controlling vertical movement of the stage 18 in such a way that the maximum value of intensity output from the detection means 16 becomes constant, and the analysis means 22 acquires information about minute irregularities in the surface of the workpiece 32 from amounts of control operation.

As shown in Figs. 1B and 1C, the surface plasmon conversion means 24 has a metal film 36, an aperture 38, and a grating 40.

The metal film 36 is formed from an evaporated film (tens to hundreds of nanometers in thickness) of; for instance, silver, and provided at the extremity of the optical fiber 26.

The aperture 38 is a minute opening whose size is equal to or smaller than the wavelength of light (e.g., tens to hundreds of nanometer in diameter, and the like) ; and is assumed to be positioned at a point on the metal film 36 that is in line with a core 42 (optical axis) of the optical fiber 26.

A grating 40 is assumed to be provided on an exit-side surface 36b of the metal film 36 and have grooves, each of which has a rectangular cross-sectional profile, placed around the aperture 38 in a concentric pattern. The grating 40 is provided on the exit-side surface 36b of the metal film 36 at a groove width and a groove pitch that are determined from a desired focal length "f." For instance, one to tens of grooves, each of which has a depth of tens to hundreds of nanometers, are provided.

The noncontact measurement device 10 of the present embodiment is configured as schematically explained above, and working effects of the device will be described below.

The noncontact measurement probe 12 of the present embodiment radiates the light spot 30, which is originated from optical interference, on the surface of the workpiece 32 by way of the surface plasmon conversion means 24, thereby reducing the size of the light spot 30 in a surface direction (a direction orthogonal to the optical axis) and the direction of the optical axis. Consequently, in the present embodiment, the noncontact measurement probe 12 can be used as a position sensor for detecting a desired length "f" from the workpiece 32, and hence geometries of minute irregularities in the surface of the workpiece 32 can be measured in a noncontacting manner.

Specifically, when the laser beam 28 originating from the light emission means 14 is caused to enter the core 42 of the optical fiber 26 from the end face of the optical fiber 26, whereupon the light spot 30 is radiated, by way of the surface plasmon conversion means 24 provided at the extremity of the optical fiber 26, on a location spaced from the extremity of the noncontact measurement probe 12 along the optical axis of the aperture 38 by the desired length "f" determined from the groove width and the groove pitch.

Since the groove width and the groove pitch of the surface plasmon conversion means 24 are designed in accordance with the below-mentioned conditional expressions (1) and (2), the light spot 30 stemming from light interference is small in both the surface direction and the direction of the optical axis.

<Position Sensor>

Therefore, the noncontact measurement probe 12 can be used as a position sensor for detecting a desired distance "f" from the surface of the workpiece 32. Specifically, in a case where the surface of the workpiece 32 and the extremity of the noncontact measurement probe 12 are separated from each other or approach each other, a point in time when the intensity of the light 34 reflected from the surface of the workpiece 32 as a result of radiation of the light spot 30 on the surface of the workpiece 32 shows the maximum value can be determined to be a point in time when the distance between the surface of the workpiece 32 and the extremity of the probe 12 has come to a desired distance "f.", more specifically, by the analysis means 22.

<Measurement of a Geometry>

As a result of the noncontact measurement probe 12 being used as a position sensor, minute irregularities in the surface of the workpiece 32 can be measured. Specifically, the surface of the workpiece 32 is scanned while the distance between the surface of the workpiece 32 and the extremity of the probe is constantly controlled at the desired distance "f" in such a way that the maximum value of the intensity of the output from the detection means 16 becomes constant, whereby information about geometries of minute irregularities in the surface of the workpiece 32 can be acquired.

<Miniaturization>

In the present embodiment, the surface plasmon conversion means 24 corresponding to a metal nanostructure is provided at the extremity of the optical fiber 26, thereby constituting the noncontact measurement probe 12. Hence, The probe can be made in a very miniaturized manner when compared with an objective lens. Therefore, in the present embodiment, the noncontact measurement probe 12 can perform noncontact measurement even at a narrow location where the objective lens cannot be inserted.

<Enhancement of Resolving Power>

In order to enhance resolving power of the noncontact measurement probe 12, the degree of collection of light achieved by the grating 40 is extremely important. In the present embodiment, therefore, the grating 40 does not have any uniform groove width and pitch. The groove width and the groove pitch of the grating are determined so as to become gradually smaller toward a radial outside from the aperture 30 such that the light spot 38 stemming from light interference is radiated on a location, on the optical axis "c" of the aperture 38, that is spaced from the extremity of the noncontact measurement probe 12 by the desired length "f."

Incidentally, in the surface plasmon conversion means, all of the groove width and the groove pitch of the grating are made uniform. For instance, all of the groove width and the groove pitch of the grating are provided uniformly as surface plasmon conversion means that is a technique relating to a surface plasmon antenna (Kenichi Nishi and three others, "Silicon Nanophotodiode using a Surface Plasmon Antenna," Optronics, The Optronics Co., Ltd. Nov. 2006, Vol. 25, No. 299, pp. 131 to 136).

Therefore, even in a noncontact measurement probe, providing a grating having both a uniform groove width and a uniform groove pitch at the extremity of an optical fiber is usually conceivable.

However, the present inventors found that, when all of the groove width and the groove pitch were made uniform, the size of the light spot became comparatively large in the surface direction and the direction of the optical axis and that the noncontact measurement probe could yield only measurement results of low resolving power.

Further, the present inventors found that the size of the light spot could be made smaller at the time of use of the grating for a noncontact measurement probe by means of making the groove width and the groove pitch of the grating gradually smaller from the aperture to the radial outside rather than making the width and pitch of the grooves uniform.

<Design of a groove width and a groove pitch>

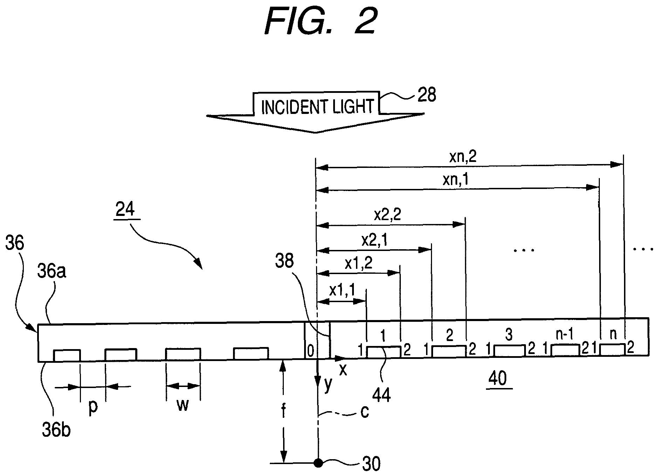

A groove width and a groove pitch of the characteristic grating 40 of the present embodiment will be described hereunder by reference to Fig. 2.

Fig. 2 shows the characteristic grating 40 of the embodiment of the present invention in an enlarged manner.

In the drawing, in relation to the grating 40, a width "w" (the width of a recess of a groove 44) and a pitch "p" (the width of a projection of the groove 44) of the groove 44 having a rectangular cross-sectional profile are determined so as to become gradually smaller from the aperture 38 toward the radial outside in such a way that the light spot 30 stemming from light interference is radiated at a position on the optical axis "c" of the aperture 38 spaced from the exit-side surface 36b of the metal film 36 by a desired distance "f."

In the present embodiment, the positions (distances) of edges of the respective grooves from the aperture are computed by means of the below-mentioned conditional equations (1) and (2), whereby the width and pitch of the grooves of the grating are designed so as to become gradually smaller from the aperture to the radial outside. The conditional equations (1) and (2) use the propagation theory on surface plasmon and the theory of light wave interference.

In the present embodiment, provided that a distance from the exit-side surface 36b of the metal film 36 to the light spot 30 along the optical axis "c" of the aperture 38 is taken as "f" and that the phase of light re-converted by the $s^{th}$ edge of the $n^{th}$ groove 44 from the aperture 38 toward the radial outside is taken as $\phi_{n,s}$, the grating 40 is provided on the metal film 36 such that the position $x_{n,s}$ of the $s^{th}$ edge of the $n^{th}$ groove 44 from the aperture 38 toward the radial outside fulfills the conditional equations (1) and (2).

Specifically, a spatial distribution of light transmitted through the surface plasmon conversion means 24 is considered to be an interference pattern determined from propagation light radiated from the aperture 38 and propagation light re-converted by the grooves 44 located around the aperture 38. In the present embodiment, attention is paid to the fact that the edges of the grooves 44 greatly contribute to re-conversion of light performed at the grooves 44, and computation provided below is performed.

In the drawing, in order to radiate the light spot 30 stemming from light interference on a position at the distance "f," the phase $\phi_{n,s}$ of the light re-converted by the $s^{th}$ edge of the $n^{th}$ groove 44 from the aperture 38 must fulfill the conditional equations (1) and (2). The number "s" of the edge is counted such that an edge close to the aperture 38 is taken as the first edge and that an edge located at the outside of the first edge is taken as the second edge.

[Mathematical Expression 3]

$$\phi_{n,s} + \frac{\omega}{c}\sqrt{f^2 + x_{n,s}^2} - \frac{\omega}{c}f = 2\pi m \quad ...(1)$$

$$\phi_{n,s} = \sum_{k=0}^{n-1} \delta_k + n_{eff}\frac{\omega}{c}x_{n,s} + \Delta\phi_{n,s} \quad ...(2)$$

where

c: light speed of the light 28

$\omega$: an angular frequency of the light 28

m: an integral number of the groove 44 from the aperture 38

$n_{eff}$: effective refractive index of the surface plasmon

$\delta_k$: a phase lag of the surface plasmon achieved after the surface plasmon has transmitted through the $k^{th}$ groove 44 from the aperture 38

$\delta_0$: an initial phase difference between spatially-propagated light from the aperture 38 and the surface plasmon

$\Delta\phi_{n,s}$: a difference between the phase of surface plasmon reached at the $s^{th}$ edge of the $n^{th}$ groove 44 from the aperture 38 and the phase of light re-converted at the edge position of the groove 44.

<Radiation Mechanism of the Light Spot>

A radiation mechanism of the light spot 30 generated by the surface plasmon conversion means 24 will now be described more specifically.

Broadly, the following three stages are present between incidence of the laser beam 28 on the surface plasmon conversion means 24 and radiation of the light spot 30.

(1) Transmission of a laser beam through an aperture
(2) Propagation of surface plasmon, and re-conversion of surface plasmon into light
(3) Radiation of a light spot stemming from interference

Respective stages will be described below.

(1) Transmission of a laser beam through an aperture

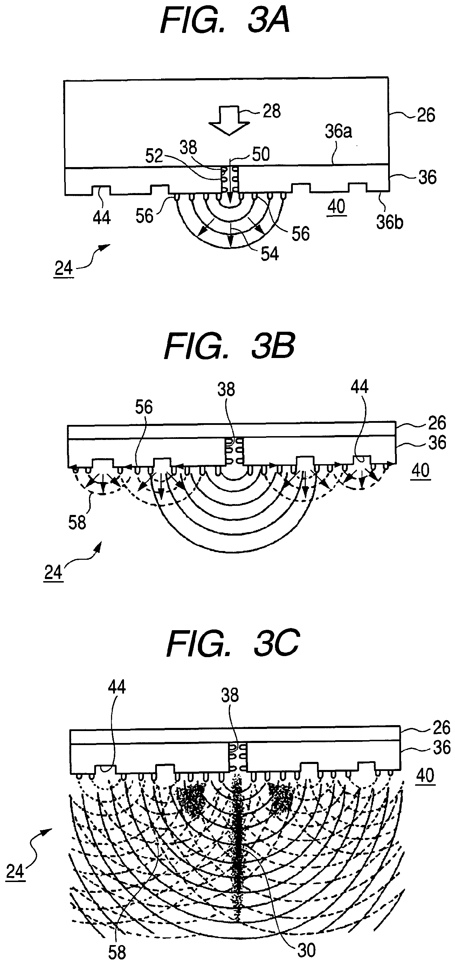

As shown in Fig. 3A, the laser beam 28, which originates from the optical fiber 26 and has entered the surface plasmon conversion means 24, transmits through the aperture 38.

Since a diameter of the aperture 38 is smaller than the wavelength of the laser beam 28, characteristics (a transmission factor, a phase shift, and the like) of light 50 transmitted through the aperture 38 is greatly affected by a mechanism involving surface plasmon 52 on the metal surface of an interior wall of the aperture 38.

Of the light 50 transmitted through the aperture 38, a part of the light is uniformly radiated as propagated light (normal light) 54 in all directions of a space, and another part of the light turns into surface plasmon 56 that propagates over the metal film 36.

(2) Propagation of surface plasmon, and re-conversion of surface plasmon into light

If the surface of the metal film 36 is a smooth plane, the surface plasmon 56 will only be subjected to gradual attenuation without re-converted into propagation light.

However, in the present embodiment, the plurality of grooves 44 are provided on the exit-side surface 36b of the metal film 36. Hence, as shown in Fig. 3B, the surface plasmon 56 propagating over the metal film 36 undergoes the influence of the grooves 44, and a part of energy of the surface plasmon is spatially re-converted into propagation light beams 58.

(3) Radiation of a light spot stemming from interference

Consequently, as shown in Fig. 3C, a spatial distribution of transmitted light is radiated by means of interference among the respective propagation light beams 58 generated as a result of the surface plasmon 56 being re-converted by the respective grooves 44 of the metal film 36.

Specifically, when the laser beam 28 from the optical fiber 26 enters the surface plasmon conversion means 24, the metal film 36 converts the laser beam 28 into surface plasmon. The surface plasmon is re-converted into the propagation light beams 58 by means of the edges of the respective grooves 44 of the grating 40. This is equivalent to the fact that the light sources originating from the propagation light beams 58 are located at the edges of the respective grooves 44 of the grating 40. As a consequence, the light spot 30 is radiated on the location spaced by the distance "f" by means of interference among spherical waves originating from the plurality of point light sources located in the grating 40.

In the present embodiment, there can be consequently acquired a light spot clearer than that generated by a grating having a uniform groove width and a uniform groove pitch.

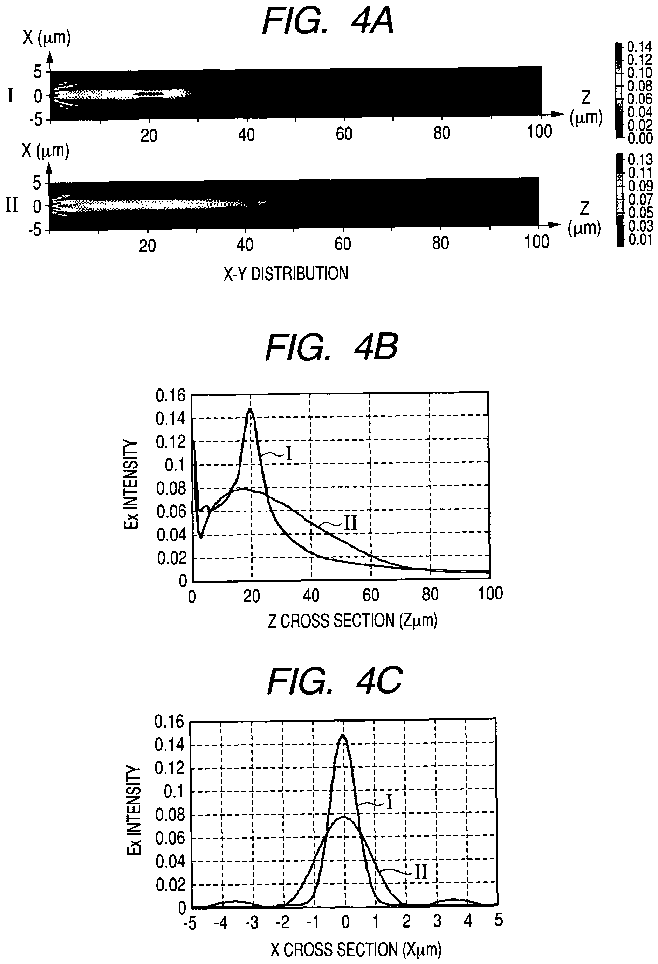

Figs. 4A to 4C show a result of comparison between the light spot generated by a noncontact measurement probe of the comparative example and the light spot generated by the noncontact measurement probe of the present embodiment.

In the drawings, in order to compare the light spot generated by the noncontact measurement probe of the comparative example with the light spot generated by the noncontact measurement probe of the present embodiment, a distribution of field strength |E²| of the light spot radiated by the nanostructure is used.

Fig. 4A shows an X-Y distribution of the light spots; Fig. 4B is a Z cross-sectional view of the X-Y distribution of the light spots shown in Fig. 4A; and Fig. 4C is an X cross-sectional view of the X-Y distribution of the light spot shown in Fig. 4A.

The noncontact measurement probe of the comparative example used herein has a uniform groove width and a uniform groove pitch. The noncontact measurement probe of the present embodiment used herein has a groove width and a groove pitch fulfilling the conditional equations (1) and (2).

As is evident from the drawings, the light spot of the present embodiment represented by reference numeral I of the drawing is smaller than the light spot of the comparative example represented by reference numeral II of the drawing in the surface direction (a cross section X) and the direction of the optical axis (a cross section Z).

Specifically, the distribution of intensity of the light spot of the comparative example is too broad, and hence it is difficult to define the maximum value of the intensity of the light spot at one point. In contrast, in the present embodiment, the distribution of the intensity of the light spot shows the maximum value at one point. Consequently, when compared with the noncontact measurement probe of the comparative example, the noncontact measurement probe of the present embodiment is very preferable for use as a position sensor in the noncontact measurement device.

Modified Example

<Measurement Mode>

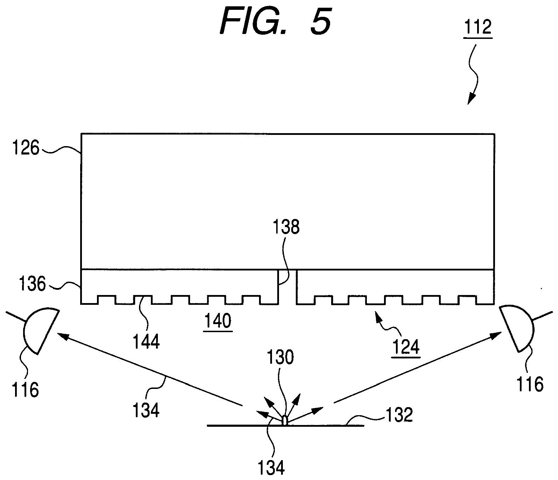

In relation to the configuration, there has been described the example where the light spot is radiated on the surface of the workpiece by means of the noncontact measurement probe and where reflected light is collected. However, the present invention is not limited to the configuration and can also be applied to a measurement mode shown in Fig. 5. Elements corresponding to those shown in Fig. 1 are additionally assigned reference numeral 100, and their repeated explanations are omitted.

In the measurement mode shown in the drawing, a noncontact measurement probe 112 radiates a light spot 130 on the surface of a workpiece 132, and light 134 scattered on the surface of the workpiece 132 is detected by means of a photodetector 116 located around the noncontact measurement probe 112, so that information about irregularities in the surface of the workpiece 132 is acquired.

Even in the illustrated measurement mode, an attempt can be made to miniaturize the noncontact measurement probe 112 and enhance the resolving power of the probe as in Fig. 1. Hence, noncontact measurement can be performed even in a narrower location, and noncontact measurement of a smaller area can be performed.

<Surface Plasmon Conversion Means>

In relation to the configuration, an example where the incident-side surface 36a of the metal film is taken as a plane surface has been described. However, the present invention is not limited to the example, and the incident-side surface or the exit-side surface of the metal film does not need to be a plane surface, so long as the grating is provided on the exit-side surface of the metal film. For example, the exit-side surface may have a semispherical recess surface and the shape of the light spot may be changed or the groove pitch of the grating may be adjusted.

Further, in the above-mentioned embodiment, the metal film which has the grating and is directly attached to the extremity of the optical fiber has been described. However, the present invention is not limited to the example, and the metal film may be provided to be spaced from the extremity of the optical fiber.

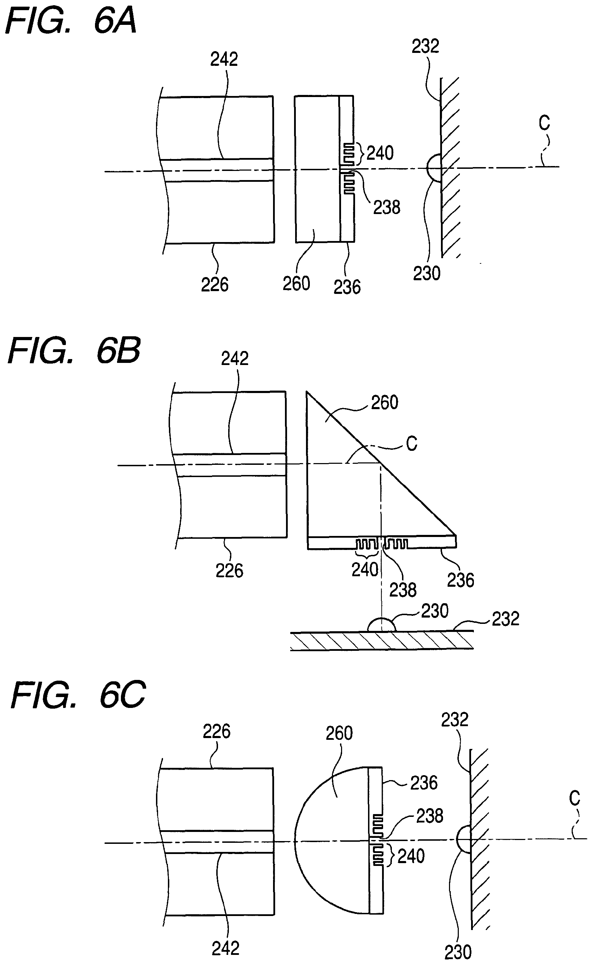

Figs. 6A to 6C show an example that the metal film is provided to be spaced from the optical fiber, and elements corresponding to those shown in Fig. 1B are additionally assigned reference numeral 200, and their repeated explanations are omitted.

In Fig. 6A, a grating holding member 260 which is formed separately from an optical fiber 226 is provided. The grating holding member 260 is disposed in the vicinity of a light exit end of the optical fiber 226. The grating holding member 260 is made of an optical transmissive material, and a light incident surface and a light exit surface of the grating holding member 260 are made to be parallel with each other. A metal film 236 having a grating 240 is provided on the light exit surface of the grating holding member 260. A structure that the metal film 236 is provided on the grating holding member 260 is readily to be manufactured, compared with a structure that the metal film 236 is provided on the extremity of the optical fiber 226. Further, the grating holding member 260 can be continuously used when the optical fiber 226 which is easy to be damaged is changed.

Fig. 6B shows an example that the grating holding member 260 is formed to have a triangular prism shape. The light originating from the light exit end of the optical fiber 226 is led to an orthogonally down direction (as shown in the drawing) by the grating holding member 260. Therefore, the positional relationship of a workpiece 232 and the optical fiber 226 does not need to be aligned. For example, this structure is effective if a shape of an inner surface in pores of the workpiece 232 is measured.

Fig. 6C shows an example that the grating holding member 260 has a semispherical shape. An aperture 238 of a metal film 236 is provided at the center portion of the grating holding member 260. Therefore, the light originating from the light exit end of the optical fiber 226 is collected to a portion of the aperture 238 by the grating holding member 260, and the light efficiency can be improved.

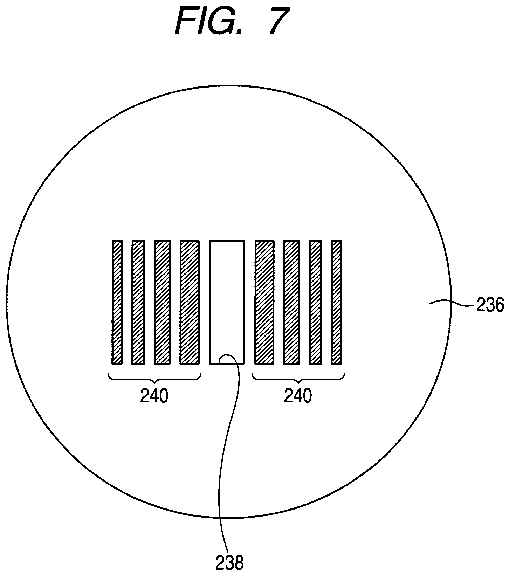

Further, in the present invention, it is preferable that the aperture provided in the metal film is formed into a rectangular shape as shown in Fig. 7 in place of the circular shape, and gratings 240 are provided parallel with a long side of the rectangular aperture 238. In this case, the light intensity of the spot becomes high and the measurement of the low-reflection workpiece surface can be measured. In particular, when the workpiece has parallel grooves and the depth and pitch of the grooves are measured, the high-efficient and high-precise measurement can be made by aligning the long side of the rectangular aperture with the parallel grooves.

FIG. 1A

    14 LIGHT EMISSION MEANS
    16 DETECTION MEANS
    22 ANALYSIS MEANS
    20 CONTROLLER

FIG. 2

    28 INCIDENT LIGHT

FIG. 4A

    X-Y DISTRIBUTION

FIG. 4B

    Z CROSS SECTION

FIG. 4C

    X CROSS SECTION

**Claims**

1.  A noncontact measurement probe (12) used when a workpiece is measured in a noncontacting manner upon exposure to light, the probe comprising:

    a light guiding path (26) which guides a light, and surface plasmon conversion means (24) which forms a light spot on the workpiece by way of surface plasmon and has a metal film (36) which is provided on a light exit end of the light guiding path (26) or in a vicinity of the light exit end of the light guiding path (26), the metal film (36) having an aperture (38) provided in line with an optical axis of the light guiding path, and a grating (40) provided around the aperture on an exit-side surface (36b) of the metal film (36) which faces the workpiece,

    wherein light from the light guiding path is converted into surface plasmon by means of the metal film (36), and the light spot is formed on a location, along an optical axis of the aperture (38), spaced from the surface plasmon conversion means by a desired distance determined from a width and a pitch of the grooves (44) by means of interference among light beams acquired by means of re-conversion of the surface plasmon at respective grooves (44) of the grating (40)

**characterised in that** the width and pitch of the grooves (44) of the grating (40) are set so as to become gradually smaller from the aperture (38) toward a radial outside whereby the light spot is radiated on the location, along the optical axis of the aperture, spaced from the surface plasmon conversion means by a desired distance,

wherein, provided that a distance from said exit-side surface (36b) of the metal film (36) of the surface plasmon conversion means (24) to the light spot along the optical axis of the aperture (38) is taken as "f" and that a phase of light re-converted by the $s^{th}$ edge of the $n^{th}$ groove (44) from the aperture (38) toward a radial outside is taken as $\phi_{n,s}$, the grating (40) is provided on the metal film such that the position $x_{n,s}$ of the $s^{th}$ edge of the $n^{th}$ groove (44) from the aperture toward the radial outside fulfills the conditional equations (1) and (2), wherein

$$\phi_{n,s} + \frac{\omega}{c}\sqrt{f^2 + x_{n,s}^2} - \frac{\omega}{c}f = 2\pi m \qquad (1)$$

$$\phi_{n,s} = \sum_{k=0}^{n-1} \delta_k + n_{eff}\frac{\omega}{c}x_{n,s} + \Delta\phi_{n,s} \qquad (2)$$

where

c: light speed of the light
$\omega$: an angular frequency of the light
m: a number (an integer) of the groove from the aperture
$n_{eff}$: effective refractive index of the surface plasmon
$\delta_k$: a phase lag of the surface plasmon achieved after the surface plasmon has transmitted through the $k^{th}$ groove from the aperture
$\delta_0$: an initial phase difference between spatially-propagated light from the aperture and the surface plasmon $\Delta\phi_{n,s}$: a difference between the phase of surface plasmon reached at the $s^{th}$ edge of the $n^{th}$ groove from the aperture and the phase of light re-converted at the edge position of the groove.

2. The noncontact measurement probe according to claim 1, further comprising an analysis means (22) adapted to, when a surface of the workpiece is caused to be spaced apart from or approach the extremity of the noncontact measurement probe, determine a point in time when intensity of light acquired as a result of radiation of the light spot on the surface of the workpiece shows the maximum value , whereby the determined point in time represents the point in time when the distance between the surface of the workpiece and the extremity of the noncontact measurement probe comes to a desired distance determined from the groove width and the groove pitch.

3. The noncontact measurement probe according to claim 2, further comprising a controller (20) adapted to control a scan over the surface of the workpiece while controlling the distance between the surface of the workpiece and the extremity of the noncontact measurement probe constantly at the desired distance, whereby information about irregularities in the surface of the workpiece is acquired.

4. The noncontact measurement probe according to any one of claims 1 through 3, wherein the light guiding path is an optical fiber, and the metal film is provided on a light exit end of the optical fiber.

5. The noncontact measurement probe according to any one of claims 1 through 3, wherein the surface plasmon conversion means has a holding member which is disposed in the vicinity of the light exit end of the light guiding path and to be spaced from the light guiding path, and the metal film is provided on the holding member.

6. The noncontact measurement probe according to any one of claims 1 through 5, wherein the aperture of the metal film has a rectangular shape, and the grating is formed parallel with a long side of the aperture.

**Patentansprüche**

1. Berührungslose Messsonde (12), die verwendet wird, wenn ein Werkstück bei Belichtung bzw. Ausgesetztsein zu Licht berührungslos vermessen wird, wobei die Sonde umfasst:

eine Lichtleiterbahn (26), der ein Licht führt; und Oberflächenplasmonenumwandlungsmittel (24), das einen Lichtfleck auf dem Werkstück mittels Oberflächenplasmonen bildet und einen Metallfilm (36) aufweist, der an einem Lichtaustrittsende der Lichtleiterbahn (26) oder in der Nähe des Lichtaustrittsendes der Lichtleiterbahn (26) bereitgestellt ist, wobei der Metallfilm (36) eine Öffnung (38), die in einer Linie mit einer optischen Achse der Lichtleiterbahn bereitgestellt ist, und ein Gitter (40) aufweist, das um die Öffnung herum an einer Austrittsseitenfläche bzw. -oberfläche (36b) des Metallfilms (36) bereitgestellt ist, die dem Werkstück zugewandt ist,

wobei Licht von der Lichtleiterbahn mittels des Metallfilms (36) in Oberflächenplasmonen umgewandelt wird und der Lichtfleck an einer Stelle entlang einer optischen Achse der Öffnung (38) gebildet wird, die von dem Oberflächenplasmonenumwandlungsmittel um einen gewünschten Abstand beabstandet ist, der aus einer Breite und einer Teilung der Rillen (44) mittels Interferenz unter den Lichtstrahlen bestimmt wird, die mittels Rückumwandlung des Oberflächenplasmons an jeweilige Rillen (44) des Gitters (40) erhalten werden,

**dadurch gekennzeichnet, dass** die Breite und die Teilung der Rillen (44) des Gitters so festgelegt sind, dass sie von der Öffnung (38) zu einer radialen Außenseite allmählich kleiner werden, wodurch der Lichtfleck an der Stelle entlang der optischen Achse der Öffnung, um den gewünschten Abstand von dem Oberflächenplasmonenumwandlungsmittel beabstandet, abgestrahlt wird, wobei, vorausgesetzt dass ein Abstand von der Austrittsseitenfläche bzw. -oberfläche (36b) des Metallfilms (36) des Oberflächenplasmonenumwandlungsmittels (24) zu dem Lichtfleck entlang der optischen Achse der Öffnung (38) als "f" angenommen wird und dass eine Phase von Licht wieder umgewandelt durch die $s^{te}$ Kante der $n^{ten}$ Rille (44) von der Öffnung (38) in Richtung einer radialen Außenseite als $\phi_{n,s}$ angenommen wird, das Gitter (40) an dem Metallfilm derart bereitgestellt ist, dass die Position $x_{n,s}$ der $s^{ten}$ Kante der $n^{ten}$ Rille (44) von der Öffnung zu der radialen Außenseite die Bedingungsgleichungen (1) und (2) erfüllt, wobei

$$\phi_{n,s} + \frac{\omega}{c}\sqrt{f^2 + x_{n,s}^2} - \frac{\omega}{c}f = 2\pi m \qquad (1)$$

$$\phi_{n,s} = \sum_{k=0}^{n-1} \delta_k + n_{eff}\frac{\omega}{c}x_{n,s} + \Delta\phi_{n,s} \qquad (2)$$

worin

c: Lichtgeschwindigkeit des Lichts
$\omega$: eine Winkelfrequenz des Lichts
m: eine Zahl (eine ganze Zahl) der Rille von der Öffnung
$n_{eff}$: effektiver Brechungsindex des Oberflächenplasmons
$\delta_k$: eine Phasenverzögerung des Oberflächenplasmons, die erreicht wird, nachdem das Oberflächenplasmon durch die $k^{te}$ Rille von der Öffnung transmittiert ist
$\delta_0$: eine anfängliche Phasendifferenz zwischen räumlich propagiertem Licht von der Öffnung

und dem Oberflächenplasmon
$Ä\phi_{n,s}$: eine Differenz zwischen der Phase des Oberflächenplasmons, die an der $s^{ten}$ Kante der $n^{ten}$ Rille von der Öffnung erreicht wird, und der Phase des Lichts, das an der Kantenposition der Rille wieder umgewandelt wird.

2. Berührungslose Messsonde nach Anspruch 1, ferner umfassend ein Analysemittel (22), das angepasst ist, wenn eine Fläche bzw. Oberfläche des Werkstücks veranlasst wird, von dem äußersten Ende der berührungslosen Messsonde beabstandet zu sein oder sich diesem zu nähern, einen Zeitpunkt zu bestimmen, zu dem die Intensität von Licht, das als ein Ergebnis von Strahlung des Lichtflecks auf der Oberfläche des Werkstücks erfasst wird, den Maximalwert zeigt, wodurch der bestimmte Zeitpunkt den Zeitpunkt darstellt, zu dem der Abstand zwischen der Oberfläche des Werkstücks und dem äußersten Ende der berührungslosen Messsonde ein gewünschter Abstand wird, der aus der Rillenbreite und der Rillenteilung bestimmt wird.

3. Berührungslose Messsonde nach Anspruch 1, ferner umfassend einen Controller (20), der angepasst ist, eine Abtastung über die Oberfläche des Werkstücks zu steuern bzw. zu regeln, während der Abstand zwischen der Oberfläche des Werkstücks und dem äußersten Ende der berührungslosen Messsonde konstant in der gewünschten Entfernung gesteuert bzw. geregelt wird, wodurch Informationen über Unregelmäßigkeiten in der Oberfläche des Werkstücks erfasst werden.

4. Berührungslose Messsonde nach einem der Ansprüche 1 bis 3, wobei die Lichtleiterbahn eine optische Faser bzw. ein Lichtwellenleiter ist und der Metallfilm an einem Lichtaustrittsende der optischen Faser bereitgestellt ist.

5. Berührungslose Messsonde nach einem der Ansprüche 1 bis 3, wobei das Oberflächenplasmonenumwandlungsmittel ein Halteglied aufweist, das in der Nähe des Lichtaustrittsendes der Lichtleiterbahn angeordnet ist und von der Lichtleiterbahn zu beabstanden ist, und wobei der Metallfilm an dem Halteglied bereitgestellt ist.

6. Berührungslose Messsonde nach einem der Ansprüche 1 bis 5, wobei die Öffnung des Metallfilms eine rechteckige Form aufweist und das Gitter parallel zu einer langen Seite der Öffnung ausgebildet ist.

**Revendications**

1. Sonde de mesure sans contact (12) utilisée lorsqu'une pièce est mesurée sans contact lors d'une exposition à la lumière, la sonde comprenant :

un trajet de guidage de la lumière (26) qui guide une lumière, et

un moyen de conversion de plasmonique de surface (24) qui forme un point lumineux sur la pièce à l'aide d'un plasmon de surface et possède un film métallique (36) qui est prévu sur une extrémité de sortie de lumière du trajet de guidage de la lumière (26) ou à proximité de l'extrémité de sortie de lumière du trajet de guidage de la lumière (26), le film métallique (36) ayant une ouverture (38) prévue en alignement avec un axe optique du trajet de guidage de la lumière, et une grille (40) prévue autour de l'ouverture sur une surface côté sortie (36b) du film métallique (36) qui est tournée vers la pièce,

dans laquelle la lumière qui provient du trajet de guidage de la lumière est convertie en un plasmon de surface à l'aide du film métallique (36), et le point lumineux est formé sur un emplacement, le long d'un axe optique de l'ouverture (38), espacé du moyen de conversion plasmonique de surface selon une distance souhaitée déterminée à partir d'une largeur et d'une hauteur des rainures (44) à l'aide d'une interférence parmi des faisceaux lumineux acquis par une re-conversion du plasmon de surface au niveau des rainures respectives (44) de la grille (40), **caractérisée en ce que** la largeur et la hauteur des rainures (44) de la grille (40) sont définies de façon à diminuer progressivement entre l'ouverture (38) et une partie externe radiale, moyennant quoi le point lumineux est irradié sur l'emplacement, le long de l'axe optique de l'ouverture, espacé du moyen de conversion plasmonique de surface selon une distance souhaitée,

dans laquelle, à condition qu'une distance entre ladite surface côté sortie (36b) du film métallique (36) du moyen de conversion plasmonique de surface (24) et le point lumineux le long de l'axe optique de l'ouverture (38) soit « f » et qu'une phase de la lumière re-convertie par le s$^{ième}$ bord de la n$^{ième}$ rainure (44) entre l'ouverture (38) et une partie externe radiale soit $\varphi_{n,s}$, la grille (40) est prévue sur le film métallique de sorte que la position $X_{n,s}$ du s$^{ième}$ bord de la n$^{ième}$ rainure (44) entre l'ouverture et la partie externe radiale satisfasse les équations conditionnelles (1) et (2), dans laquelle

$$\phi_{n,s} + \frac{\omega}{c}\sqrt{f^2 + x_{n,s}^2} - \frac{\omega}{c}f = 2\pi m \qquad (1)$$

$$\phi_{n,s} = \sum_{k=0}^{n-1} \delta_k + n_{eff}\frac{\omega}{c}x_{n,s} + \Delta\phi_{n,s} \qquad (2)$$

où

c : vitesse de la lumière

$\omega$ : fréquence angulaire de la lumière

m : nombre (entier) de rainures à partir de l'ouverture

$n_{eff}$ : indice de réfraction effectif du plasmon de surface

$\delta_k$ : retard de phase du plasmon de surface après que le plasmon de surface a été transmis à travers la k$^{ième}$ rainure à partir de l'ouverture

$\delta_0$ : différence de phase initiale entre la lumière propagée spatialement qui provient de l'ouverture et le plasmon de surface

$\Delta\varphi_{ns}$ : différence entre la phase du plasmon de surface atteinte au niveau du s$^{ième}$ bord de la n$^{ième}$ rainure à partir de l'ouverture et la phase de la lumière re-convertie au niveau du bord de la rainure.

2. Sonde de mesure sans contact selon la revendication 1, qui comprend en outre un moyen d'analyse (22) adapté, lorsqu'une surface de la pièce est espacée de ou s'approche de l'extrémité de la sonde de mesure sans contact, pour déterminer un moment auquel l'intensité de la lumière acquise à la suite de l'irradiation du point lumineux sur la surface de la pièce présente la valeur maximale, moyennant quoi le moment déterminé représente le moment auquel la distance entre la surface de la pièce et l'extrémité de la sonde de mesure sans contact atteint une distance souhaitée déterminée à partir de la largeur et de la hauteur de la rainure.

3. Sonde de mesure sans contact selon la revendication 2, qui comprend en outre un contrôleur (20) adapté pour contrôler un balayage sur la surface de la pièce tout en contrôlant la distance entre la surface de la pièce et l'extrémité de la sonde de mesure sans contact de manière constante à la distance souhaitée, moyennant quoi des informations sur les irrégularités de la surface de la pièce sont obtenues.

4. Sonde de mesure sans contact selon l'une quelconque des revendications 1 à 3, dans laquelle le trajet de guidage de la lumière est une fibre optique, et le film métallique est prévu sur une extrémité de sortie de lumière de la fibre optique.

5. Sonde de mesure sans contact selon l'une quelconque des revendications 1 à 3, dans laquelle le moyen de conversion plasmonique de surface possède un élément de maintien qui est disposé à proximité de la sortie de lumière du trajet de guidage de la lumière et qui est espacé du trajet de guidage de la lumière, et le film métallique est prévu sur l'élément de maintien.

**6.** Sonde de mesure sans contact selon l'une quelconque des revendications 1 à 5, dans laquelle l'ouverture du film métallique possède une forme rectangulaire, et la grille est formée parallèlement à un côté long de l'ouverture.

## FIG. 1A

## FIG. 1B

## FIG. 1C

# FIG. 2

## *FIG. 3A*

## *FIG. 3B*

## *FIG. 3C*

FIG. 4A

FIG. 4B

FIG. 4C

# FIG. 5

## FIG. 6A

## FIG. 6B

## FIG. 6C

# FIG. 7

240

240

236

238

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060153045 A
- EP 1672409 A
- US 7149395 A

**Non-patent literature cited in the description**

- Silicon Nanophotodiode using a Surface Plasmon Antenna. **KENICHI NISHI.** Optronics. The Optronics Co., Ltd, 2006, vol. 25, 131-136